# EUROPEAN PATENT APPLICATION

(11) **EP 0 649 238 A2**
(43) Date of publication of application: **19.04.1995**
(21) Application number: 94307372.6
(22) Date of filing: 07.10.1994
(51) Int. Cl.: H04L 29/06

(54) **Computer network with distributed resource information**

(30) Priority: 15.10.1993 US 138517
(71) Applicant: Hewlett-Packard Company, Palo Alto, California 94304 (US)
(72) Inventor: Deininger, Axel Otto Siegfried, Corvallis, OR 97330 (US)
(74) Representative: Colgan, Stephen James

(57) **Abstract**

A computer network has a client computer (11) connected to a server computer (20). The client computer is used by a user to run an application program that performs a specific task, such as word processing. When the user instructs the application program to display resource information, such as information about the capabilities of all printers currently available for use by the application, the client computer sends a request to display the resource information to the server computer. The server computer receives the request and directly displays the resource information on a display (16) connected to the client computer. The resource information is displayed as a dialog box associated with the application program and consistent with the user interface established or followed by the application program.

## Description

### Field of the Invention

This invention relates to the data processing field. More particularly, this invention is a computer network with distributed resource information.

### Background of the Invention

The rapid growth in the use of personal computers and workstations in the 1980's and early 1990's has thrust the computer industry into an exciting, challenging, and tumultuous era. Rapidly exiting the computer landscape are the good old days of yesteryear, where all of the computing power and function was centrally located in a mainframe computer, tightly controlled in a "glass house" environment. Also rare today is a true standalone personal computer, which, like the mainframe computer but on a smaller scale, controlled and "owned" all information requested by the user.

Today's computing model is decidedly more complex. Computers are hooked up in local area networks, connected to other personal computers, workstations, minicomputers, and/or mainframes, in addition to resources such as printers, tape drives, etc. The buzzwords of today are "client/server" and "distributed computing" -- high level concepts for the sharing of the responsibility for running an application that performs a specific user task. The advantages of a client/server or distributed computing environment are enormous: the power and function of a mainframe computer can be replicated or even enhanced by several orders of magnitude -- all for a fraction of the cost of the mainframe computer.

But these enormous advantages do not come without enormous problems. One such problem is in keeping track of and presenting resource information to an end user in a consistent, reliable manner. In the mainframe or standalone PC computing environments, this was relatively easy, since the mainframe or standalone PC controlled (and therefore knew about) all resources available to it, and also controlled the user interface. But in a client/server or distributed environment, managing resource information is much more complex. Resources can be scattered over several buildings, cities, or even countries, and can be controlled by anything from one to hundreds of interconnected personal computers, workstations, minicomputers or mainframes acting as servers for those particular resources.

Managing resource information in a distributed computing environment has thus far proven to be a daunting task. Previous attempts at solving this problem either sacrifice the nature and power of the distributed environment, or mask the problem altogether. For example, one prior attempt to solve the problem moves the responsibility for running the entire application to the computer that "owns" the resource, and runs the application remotely on the user's computer. This approach is inefficient, since it takes away the distributed nature of the computing environment by consolidating all the responsibility for running an application in a single computer. This approach doesn't work at all if resources under control of more than one computer are needed, since the application can only move to one place. This is the approach of the computing environment known today as X Windows.

Another approach is to distribute the data used by the application to computers other than the user computer. This allows the application to find out resource information, but provides no information to the application as to how to present this information in a consistent manner to the user. This is the approach of today's distributed file systems.

Another approach is to keep complete control of the application down in the user computer, and "guess" what resources are available to it. While this approach guarantees a consistent user interface, it also guarantees inaccurate information. The application may not know of available resource options, and thus not present them to the user. In addition, recently updated or changed resource information will go undetected by the user computer. This is the approach of most UNIX applications.

### Summary of the Invention

It is a primary object of the invention to provide an enhanced computer network.

It is another object of the invention to provide a computer network with distributed resource information.

These and other objects of the invention are accomplished by the computer network with distributed resource information disclosed herein.

A computer network has a client computer connected to a server computer. The client computer is used by a user to run an application program that performs a specific task, such as word processing. When the user instructs the application program to display resource information, such as information about the capabilities of a printer currently available for use by the application, the client computer sends a request to display the resource information to the server computer. The server computer receives the request and directly displays the resource information on a display connected to the client computer. The resource information is displayed as a dialog box associated with the application program and consistent with the user interface established or followed by the application program.

### Description of the Drawings

Fig. 1 shows a simplified view of the computer network of the invention.

Fig. 2 shows a more detailed view of the computer network of the invention.

Fig. 3 shows a flowchart of how resource information is requested by a client computer.

Fig. 4 shows a flowchart of how a request for resource information is processed by a dialog server computer.

Fig. 5 shows a flowchart of how resource information is updated in the dialog server computer.

Fig. 6 shows the format of a request for resource information transmitted to the dialog server computer.

Fig. 7 shows the display of exemplary resource information on a display connected to the client computer.

### Detailed Description of the Preferred Embodiment

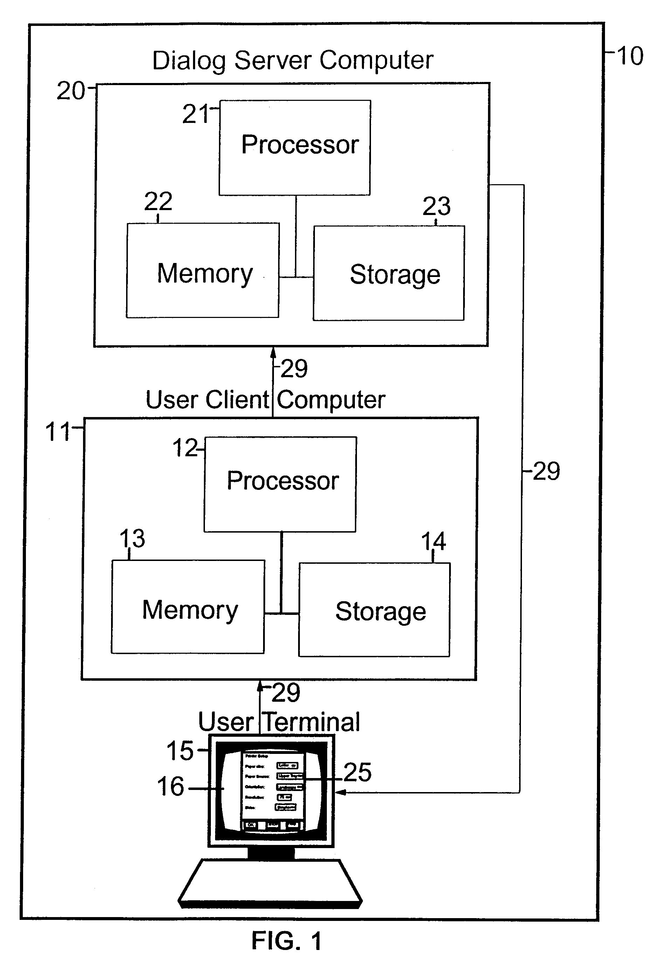

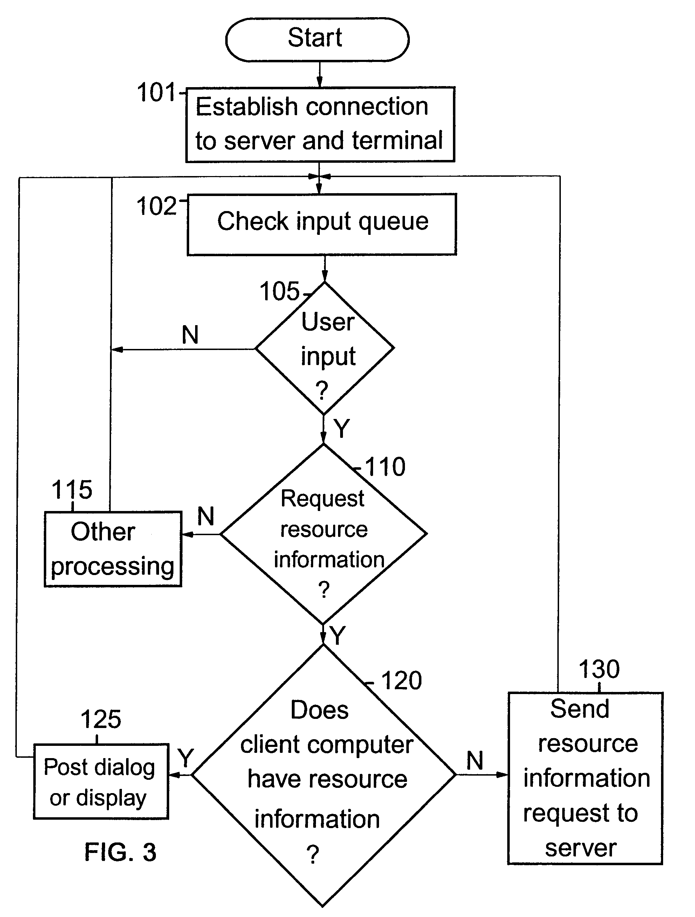

Fig. 1 shows a simplified view of computer network 10 of the invention. Network 10 contains user client computer 11, user terminal 15, and dialog server computer 20. Client computer 11 contains processor 12, memory 13, and storage 14. Processor 12 is suitably programmed to execute the flowchart of the invention shown in Fig. 3. Processor 12 also runs application program 25, shown on display screen 16 of terminal 15. For the purposes of this invention, the term "running an application program" means that client computer 11 executes all or only a portion of application program 25. If only a portion of application program 25 is executed by client computer 11, client computer 11 distributes the responsibility of executing one or more other portions (i.e. subroutines) of application program 25 to other computers, who in turn report the results back to client computer 11.

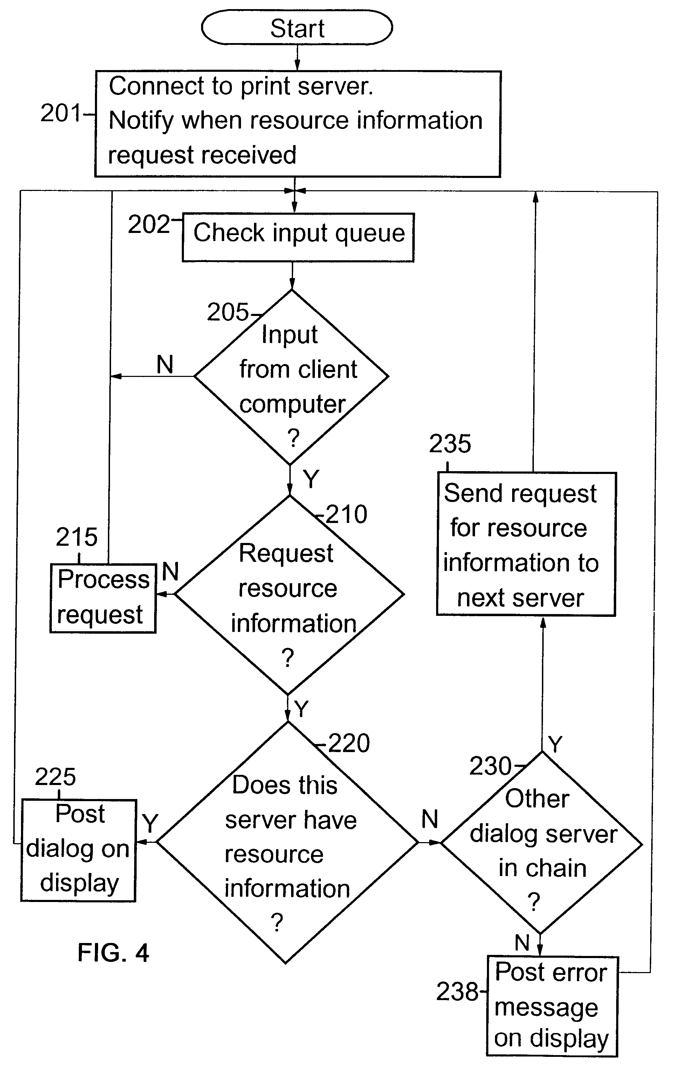

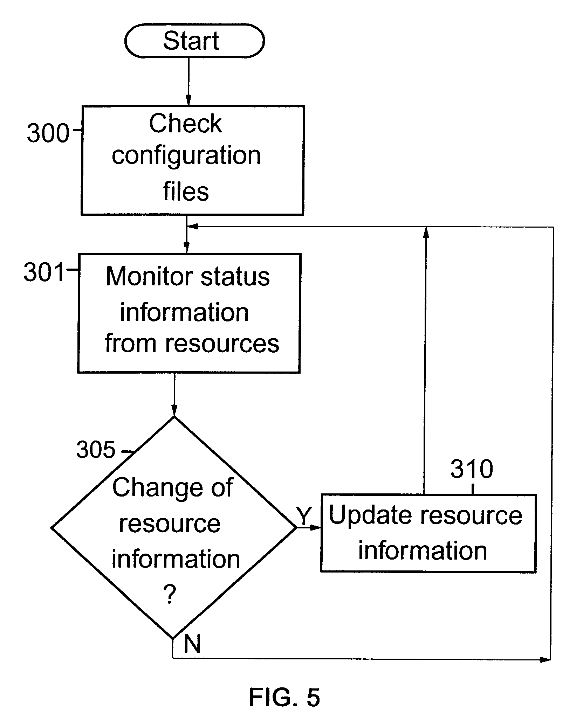

Dialog server computer 20 contains processor 21, memory 22, and storage 23. Processor 21 is suitably programmed to execute the flowcharts of the invention shown in Figs. 4 and 5. Communication link 29 connects terminal 15, client computer 11, and dialog server computer 20.

In the preferred embodiment, user terminal 15 is an "X-Terminal", such as an HP 700/RX terminal. Client computer 11 is an HP 9000 Series 700 workstation, and dialog server computer 20 is a HP 9000 Series 800 multi-user computer. User terminal 15, client computer 11 and dialog server computer 20 communicate to each other via an industry standard TCP/IP communications protocol over communication link 29.

When the user instructs application program 25 to display resource information, such as information about the capabilities of all printers currently available for use by the application, client computer 11 sends a request to display the resource information to server computer 20. Server computer 20 receives the request and directly displays the resource information on display 16. The resource information is displayed as a dialog box associated with application program 25 and consistent with the user interface established or followed by application program 25.

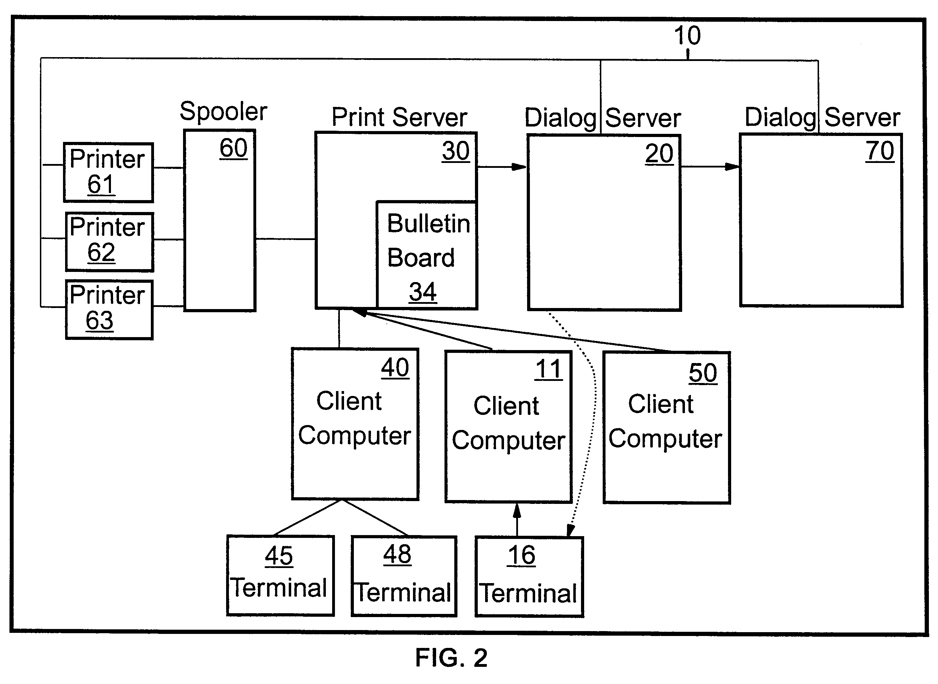

Fig. 2 shows a more detailed view of computer network 10 of the invention. Print server 30 has been inserted between client computer 11 and dialog server 20. Client computer 11 is as shown in Fig. 1, and is joined by user client computers 40 and 50. Client computer 40 supports two terminals: terminals 45 and 46. Client computer 40 can be a workstation or a minicomputer with capabilities of supporting one to hundreds of terminals. Client computer 50 is a workstation having the function of a terminal imbedded within it. Client computer 50 does not support additional terminals, even though it might functionally contain this capability.

Print server 30 contains bulletin board 34, a common feature of X-Servers known by those skilled in the art as "window properties". Bulletin board 34 is used in the preferred embodiment to facilitate communication between client servers 11, 40, and 50 with dialog server 20, as will be described in more detail later, although an alternate embodiment has been contemplated that eliminates the use of bulletin board 34. Print server 30 is connected to dialog server 20 and spooler 60. Spooler 60 supports anywhere from one to hundreds of printers; exemplary printers 61-63 are shown.

Dialog server 20 is shown in Fig. 2 connected to an additional dialog server 70, although only one dialog server is needed. As will be described in more detail later, anywhere from two to dozens of dialog servers can be chained together in the invention.

Fig. 3 shows a flowchart of how resource information is requested by client computer 11. Block 101 establishes a logical connection from client computer 11 to a server. In the preferred embodiment, this connection is established to print server 30. This is done since client 11 needs to have this connection established to print anyway, and bulletin board 34 can be used to obviate the need for establishing a second connection with dialog server 20. In a contemplated alternate embodiment, block 101 establishes a direct TCP/IP connection with dialog server 20.

Block 101 also establishes the logical connections necessary to communicate with any attached terminals. In our example, a connection between client computer 11 and user terminal 15 is established.

Block 102 checks its input queue (contained in memory 13, Fig. 1) to see if any requests have come from the user running application program 25. If block 105 determines that there has been some user request, block 110 asks if this user input is a request to display resource information. If not, block 110 is answered negatively, and block 115 performs other processing not relevant to this invention. Flow of control loops back to block 102, where the input queue is again checked.

When block 110 is answered affirmatively, block 120 asks if client computer 11 has the resource information requested by the user. If block 120 determines that client computer 11 has the resource information, as would be the case with resources directly controlled by client computer 11, block 120 is answered affirmatively, and block 125 posts the resource information on display 16 in the form of a dialog box, in a manner similar to how client computer posts other information on display 16. If block 120 determines that client computer 11 does not have the resource information, block 120 is answered negatively, and block 130 sends a request for resource information to bulletin board 34 of print server 30.

Fig. 4 shows a flowchart of how a request for resource information is processed by dialog server computer 20. Block 201 establishes a logical connection from dialog server 20 to print server 30, and asks print server 30 to notify dialog server 20 of any requests for resource information. In the preferred embodiment, where print server 30 is an X-server, this notification procedure is actually a request to be notified when any window properties change. In the alternate embodiment discussed above, this connection is not needed, since all necessary connections between the client computer(s) and dialog server 20 have already been established in block 101.

Block 201 also establishes the logical connection necessary to communicate with an upstream dialog server computer, if any. In our example shown in Fig. 2, a connection with dialog server computer 70 is established.

Block 202 checks its input queue (contained in memory 22, Fig. 1) to see if a notification has been received from print server 30 that a request for resource information was sent in block 130 to bulletin board 34. If block 205 determines that a request was sent, block 210 asks if this request is a request to display resource information. If not, block 210 is answered negatively, and block 215 performs other processing not relevant to this invention. Flow of control loops back to block 202, where the input queue is again checked.

When block 210 is. answered affirmatively, block 220 asks if dialog server computer 20 has the resource information requested by the user. If block 220 determines that dialog server computer 20 has the resource information (contained in storage 23, Fig. 1) block 220 is answered affirmatively, and block 225 posts the resource information on display 16.

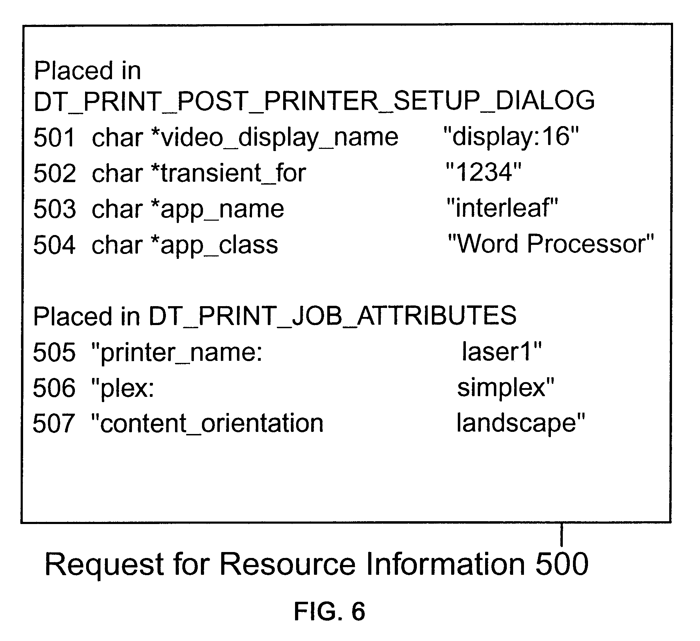

In the preferred embodiment, this posting is done in the form of a dialog box corresponding to the user interface established or followed by the application program, and associated with (i.e. belongs to) the application program, although other ways of displaying resource information could also be used. In the preferred embodiment, this posting is done directly to display 16 without requiring substantially any involvement of client computer 11. As will be discussed in more detail later, the format of the request for resource information shown in Fig. 6, in conjunction with existing capabilities of the "X-Windows" architecture, provides the mechanism to allow this direct posting to occur. While many reference manuals have been written about X-Windows, the manual "X Window System", by Robert W. Scheifler and James Gettys (1992, Digital Press) is exemplary of the current state of the art of X-Windows as it relates to this invention, especially with respect to its discussion of ICCCM.

If block 220 determines that dialog server computer 20 does not have the resource information, block 220 is answered negatively. Block 230 checks to see if there another dialog server in the chain. If so, as is the case in our example, block 235 sends the request for resource information on to dialog server 70. Dialog server 70 would then execute the same flowchart shown in Fig. 4 to process the request for resource information.

If block 230 determined that there were no more dialog servers in the chain, block 238 would post an error message on display 16 that the requested resource information could not be found. In either event, flow of control loops back to block 202, to check for more requests in the input queue.

Fig. 5 shows a flowchart of how resource information is updated in the dialog server computer or computers. Block 300 checks the configuration files for any updates made to the resources since the last time the system.was started. Updates to the configuration files are entered manually and checked at system startup. Block 301 monitors status information from one or more resources. In the preferred embodiment printers 61-63 (Fig. 2) have a direct communication line for transferring status information to one or more dialog servers in the chain. The HP LaserJet 4, for example, supports a MIO Card (Multiple input output) that, when connected to the dialog server(s), establishes this communication line and automatically reports any change of status (i.e. paper size in tray, capabilities of printer, state of printer, etc.). If block 305 detects any change of resource information (by checking the status received in block 301 against the resource information stored in storage 23, Fig. 2), block 310 updates the resource information for this resource in storage 23. In either event, flow of control loops back to block 301.

Fig. 6 shows the format of a request for resource information transmitted to the dialog server computer (block 130 of Fig. 3, block 235 of Fig. 4). Request 500 contains fields 501-507. Fields 501-504 correspond to a window property concerned with connection information. Video display name field 501 specifies the name of the display (i.e. display 16) on which the resource information is to be displayed. Transient for field 502 contains the ID of the main window of the application program requesting the resource information (application program 25). Application name field 503 contains the name under which application program 25 is connected to display 16. Application class field 504 contains the class name under which application program 25 is connected to display 16.

Fields 505-507 correspond to a window property concerned with default information set by the application. Printer field 505 establishes a printer with the name "laser1" as the default. Plex field 506 establishes "simplex" as the default print format. Orientation field 507 establishes "landscape" as the default orientation. These defaults give the application the opportunity to pre-select different default information for presentation to the user in the dialog box than the defaults that might be selected by the dialog server.

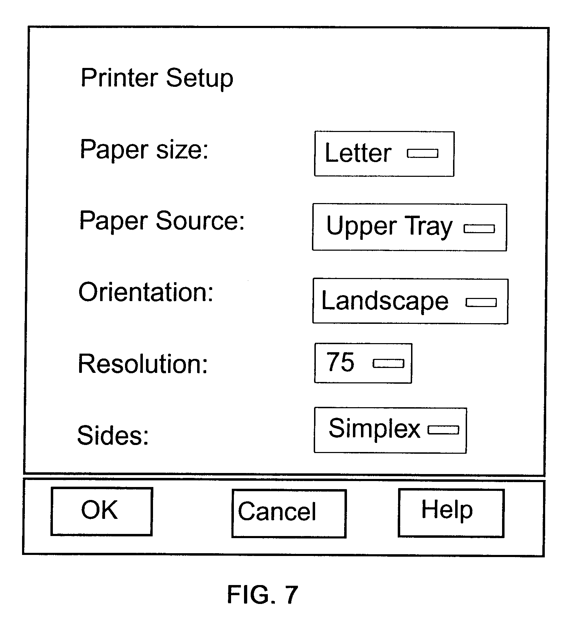

Fig. 7 shows the display of exemplary resource information on a display connected to the client computer. Note that the resource information is displayed in a dialog box, and that the default information specified in fields 506 and 507 appear on the display.

While this invention has been described with respect to the preferred and several alternate embodiments, it will be understood by those skilled in the art that various changes in detail may be made therein without departing from the spirit, scope and teaching of the invention. For example, the exact configuration of computer network 10 could be changed significantly from that shown in Fig. 1 and Fig. 2. While only one print server is shown in Fig. 2, those skilled in the art will appreciate that multiple print servers could be used and still fall within the spirit and scope of the invention. If multiple print servers are used, block 101 would establish connections to each print server to which it may want to send requests to. Block 130 would then select one of the print servers to which a connection has been established, and send the request to the selected print server. The function of the multiple print servers could be resident within the client computers, or even within the dialog servers. Likewise, in the alternate embodiment where a direct connection is established between a client computer and a dialog server, other direct connections could be established between the client computer(s) and other dialog servers, thereby circumventing the chaining effect between dialog servers. Accordingly, the herein disclosed is to be limited only as specified in the following claims.

## Claims

1. A method of presenting resource information available to an application program (25) in a computer network (10), said computer network comprising a client computer (11) and a server computer (20), said method comprising the steps of:
in said client computer,
running said application program;
receiving a request for the display of resource information from a user;
transmitting a request (500) for said resource information to a server computer;
in said server computer,
receiving said request for said resource information from said client computer;
determining that said server computer has said resource information; and
directly displaying said resource information on a display (16) connected to said client computer.

2. The method of claim 1, further comprising the step of:
in said client computer,
checking to see if said client computer has said resource information,
wherein said transmitting step is executed if said checking step determines that said client computer does not have said resource information.

3. The method of claim 2, wherein said resource information is displayed in a dialog box.

4. The method of claim 3, further comprising the steps of:
in said server computer,
receiving changed status information from a resource; and
updating said resource information based on said changed status information.

5. A client computer (11) in a computer network (10), said client computer connected to a dialog server computer (20) and to a display (16), said client computer comprising:
means for running an application program (25);
means for receiving a request for the display of resource information from a user;
means for transmitting a request (500) for said resource information to a server computer;
said display comprising:
means for receiving said resource information directly from said dialog server computer; and
means for displaying said resource information as a dialog box associated with said application program.
